Europäisches Patentamt

European Patent Office

Office européen des brevets

(19)

(11) Publication number: **0 039 500**

**B1**

(12) **EUROPEAN PATENT SPECIFICATION**

(45) Date of publication of patent specification: **24.04.85**

(21) Application number: **81103349.7**

(22) Date of filing: **04.05.81**

(51) Int. Cl.⁴: **H 04 M 15/04,** H 04 M 3/22

(54) **Apparatus for the collection of telephone criteria from electromechanical exchange devices.**

(30) Priority: **05.05.80 IT 6769780**

(43) Date of publication of application:
**11.11.81 Bulletin 81/45**

(45) Publication of the grant of the patent:
**24.04.85 Bulletin 85/17**

(84) Designated Contracting States:
**DE FR GB NL SE**

(56) References cited:
**EP-A-0 007 677**
**DE-A-2 733 065**
**US-A-3 818 456**
**US-A-3 852 533**
**US-A-3 870 823**

**JAPAN TELECOM. REV., OCT 1978, pages
273-275, MIZUNO and Ohoka, "Small Size
Subscriber Meter Observation Equipment"**

(73) Proprietor: **CSELT Centro Studi e Laboratori
Telecomunicazioni S.p.A.
Via Guglielmo Reiss Romoli, 274
I-10148 Turin (IT)**

(72) Inventor: **Astegiano, Luciano
Via Baltimora 134
Torino (IT)**
Inventor: **Rosboch, Luciano
Via Moretta 31
Torino (IT)**

(74) Representative: **Riederer Freiherr von Paar zu
Schönau, Anton
Freyung 615 Postfach 2664
D-8300 Landshut (DE)**

Courier Press, Leamington Spa, England.

**Description**

The invention concerns an apparatus for telephone-criteria collection from devices of electromechanical exchanges as stated in the prior art portion of claim 1. Such apparatus is known from US—A 3 818 456 and 3 852 533. Preferably, but not exclusively, the invention concerns an apparatus for recording data about outgoing calls on the basis of the criteria picked up at the subscriber's line circuits.

Electromechanical exchanges are not arranged to provide the administration with evident information on the sequence of criteria that appear on the various wires of the exchange devices during a connection. The knowledge of such information is necessary for traffic measurements or for exchange maintenance (including fault detection).

In the particular case in which the line circuits are monitored, the knowledge of the number of calls carried out by a subscriber, of the call hour, of the dialled number, and of the number of metering pulses allows the subscriber to be given a documentation of the traffic carried out, that can be useful to both the subscriber and the administration to check charging correctness (e.g. in case of controversy) and allows also a check of the good operation of the electromechanical meters.

Apparatuses arranged to collect telephone criteria from electromechanical exchanges and to supply data to be utilized in particular for documentation purposes are already known.

An example is described in the paper "Small Size Subscriber Meter Observation Equipment" by T. Mizuno and T. Ohoka, Japan Telecommunications Review, October 1978. In this known equipment the means extracting the criteria comprise electromechanical devices (mercury contact relays) for connection to the telephone network: due to the presence of movable devices, the power consumption is relative high and the apparatus is likely break down, thereby requiring frequent maintenance. Furthermore the known device can be connected only to subscriber lines for a single kind of exchange (in particular cross-bar exchanges).

Also the apparatus according to US—A 3 852 533 and 3 818 456 is little flexible, detects a very limited number of voltages on the monitored wires and performs a hardware logic processing of the collected voltages. Particularly, for obtaining the digital values of the samples, the availability of the sampled values is critical and according to the prior art is possible for the mentioned limited number of values and for slow digitising.

Thereagainst, the invention intends to increase the flexibility of the apparatus with reference to its use for different exchanges, including discriminating a higher number of different values picked up at convenient high frequencies.

The invention as characterized in claim 1 provides for an apparatus that can be connected to any device of any kind of electromechanical exchange, e.g. step-by-step exchanges, common control exchanges, etc. and that can pick up signalling voltages with high resolution just as demanded by the particular application. At the same time, it can be constructed by fully electronic components so as to have little consumption and to need very limited maintenance. The apparatus can be built as portable apparatus so that its use for different kinds of exchanges is considerably important.

The logic circuit in the invention does not perform any sort of logic integration. The two signals for starting conversion and for selection in the multiplexer are not concerned with a check on the validity of the data but with the availability thereof. The interpretation of the meaning of the measured voltage is wholly devoted to the processor. This leads to an increase of the flexibility of use of the apparatus and, at the same time, makes the processor free from a number of tasks transferred to the logic circuit.

The foregoing and other characteristics of the invention will become more apparent from the following description of a preferred embodiment thereof given by way of example and not in a limiting sense and shown in the annexed drawings in which:

Fig. 1 is a schematic block diagram of the invention;

Fig. 2 is a detailed diagram of the data extracting means;

Fig. 3 is the diagram of the control logic and of its connections to the local processing unit;

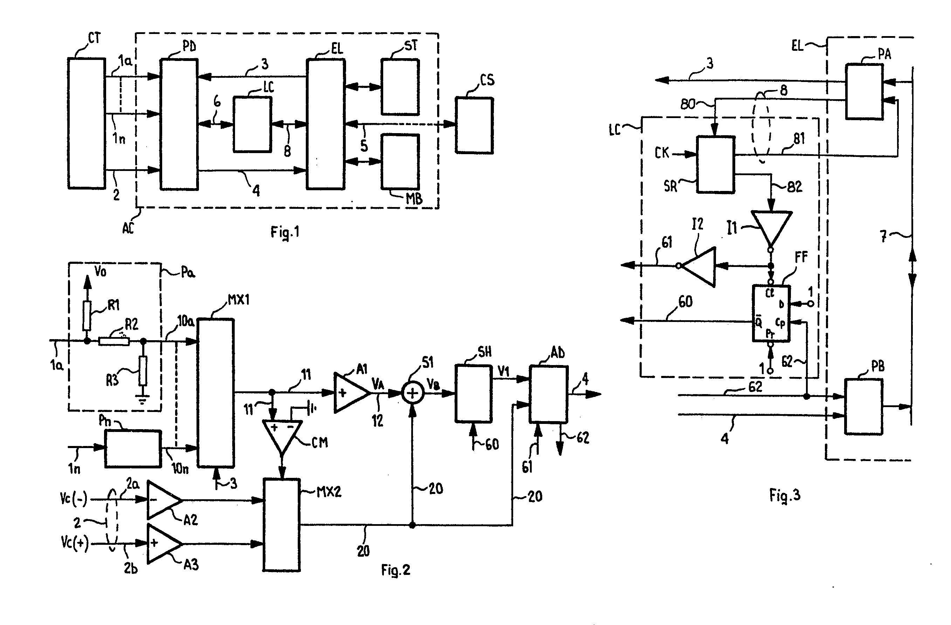

As shown in Fig. 1 the apparatus according to the invention, denoted as a whole by AC, comprises a system PD for extracting data from the exchange, a control logic LC and a local processing unit EL, associated with a local terminal ST and a mass memory MB.

Data extracting system PD is connected to telephone exchange CT via wires, 1a ... 1n, through which it receives the telephone criteria from a number of devices (e.g. line circuits, first group selectors, etc.), and via a connection 2, on whose wires there are the values of positive and negative battery of exchange voltage. The term "criterion" is hereinafter used to mean the voltage value present at a given instant on a wire; such value may be both positive and negative, i.e. the signals present on wires 1 are bipolar signals.

Data extracting system PD has the tasks of:

— adapting the voltage level present on wires 1a ... 1n to the values admitted by its circuits;
— time division multiplexing on a single wire of the criteria present on n input wires 1a ... 1n;
— converting the multiplexed bipolar signals into unipolar signals;
— converting the analog signals into digital signals.

For the bipolar-to-unipolar and the analog-to-digital conversions a reference voltage proportional to the exchange supply voltage present on wires 2 is used.

The structure of PD will become more apparent from Fig. 2.

Control logic LC, connected on the one side to PD (via connection 6) and on the other side to processing system EL (via connection 8), interfaces these two systems for timing the conversion operations and the transfer of the digitized samples to the processor.

The structure of LC will be examined with reference to Fig. 3.

The processing system EL preferably consists of a microprocessor, e.g. the Z 80 microprocessor manufactured by Zilog (Cupertino, Calif., USA) and comprises in a known way a central processing unit, a data memory, a program memory and input-output gates which are connected to an internal bus 7. The use of microprocessors for processing sampled criteria is known per se e.g. from DEA1 27 33 065.

Processor EL sends to PD through wires 3 the commands for scanning wires 1a . . . 1n; it receives from PD through wires 4 the digitized samples and processes them in order to obtain information on the sequence of the criteria that characterize the telephone connection under test. The data processed are temporarily stored in the main processor memory and then, at the end of a connection, they are transferred to a mass memory MB prior to the display on a printer of the local terminal ST.

Mass memory MB must have small power dissipation and must be little cumbersome, nonvolatile and highly reliable (in particular it must not comprise moving elements) owing to the kind of application and the environmental conditions in which it operates. Memory MB will advantageously be a magnetic bubble memory system, and will comprise, in a known way, a controller that interfaces the bus of the local processing system EL and the actual memory, a function generator with timing purposes, a coil driver and a sense amplifier.

A bubble-memory system suitable for use in the present invention is the one based on memory 7110 by Intel Corporation, Santa Clara, Calif., USA; the structure of this system is described in the "Bubble Memory Design Handbook" published by the manufacturer itself.

Terminal ST will comprise, in addition to the printer, a keyboard for usual man-machine dialogue; more particularly the keyboard of ST allows the programming of the measurement cycles for wires 1a . . . 1n and of the thresholds with which the voltages present on these wires are to be compared for the recognition of the connection phase.

Lastly device AC can be connected to a remote processing unit (CS) of higher hierarchical level through a data line 5, which can be devoted or switched. Compared to this, the apparatus AC and the processing system EL may be termed to be local equipment.

In Fig. 2, the data extracting system is connected to the exchange wires 1a . . . 1n through an input network consisting of dividers Pa . . . Pn; each divider is associated with one of the wires and consists of a series resistor R2 and two parallel resistors R1 and R3, for connection to a positive voltage $V_o$ and to ground respectively. Resistors R1, R2, R3 are chosen such as to give a pre-determined reduction in the voltage present on the wires, as will be better seen hereinafter.

Furthermore the values of R1 and of voltage $V_0$ must be such that, when a wire 1a . . . 1n is not connected to a determined voltage (floating wire), such condition can be surely recognized.

Divider outputs 10a . . . 10n are connected to the inputs of an analog multiplexer MX1, that is controlled by processor EL (Fig. 1) through wires 3. On output 11 of MX1 an operational amplifier A1 in non-inverting connection is inserted.

A1, that as known has a high input impedance, must keep pratically constant the impedance as seen from the exchange on wires 1a . . . 1n during the cyclical scanning. This is necessary because impedance variation occurring when passing from the connected to the non-connected condition of a wire would result in a voltage variation that, when the tested wires are speech wires, would give a psophometric voltage higher than that allowed.

Obviously, the internal resistance of MX1 under connection conditions and the gain of A1 affect the whole reduction ratio of the voltages present on wires 1a . . . 1n.

E.g., since the typical maximum exchange voltages are $\pm48$ V or $\pm60$ V, the gain of A1 can be chosen such that, once the divider resistances have been determined, the voltage on output 12 of A1 is 1/6 of the voltages present on wires 1a . . . 1n. In this way maximum voltages of the order of 8—10 V can be attained, which are compatible with the circuits downstream of A1.

Output 11 of MX1 is connected also to a first input (denoted by +) of a comparator CM, of which a second input (denoted by −) is grounded and the output is connected to the select input of a two-input analog multiplexer MX2. Owing to the connection of its inputs, CM will supply a signal with high (1) or low (0) logic level, according to whether a positive or negative voltage is present on wire 1 connected at that instant to wire 11.

The two inputs of MX2 are connected to the inputs of two amplifiers A2, A3, having the same gain; the first of them, with inverting connection, has its input connected to the exchange negative voltage $V_c(-)$ (wire 2a of connection 2), while the second, in non-inverting connection, has its input connected to the positive exchange voltage $V_c(+)$ (wire 2b). In presence of a negative signal on wire 1 under test, MX2 connects the output of A2 to its output 20, whereas in case of positive signal the output of A3 will be connected to wire 20. The voltage on wire 20 is the reference voltage hereinbefore mentioned; owing to the connection of amplifiers A2, A3 the reference voltage will have always the same sign (in this case a positive sign). The gain of amplifiers A2 and A3 must be such that the reference voltage might be reduced with respect to the exchange voltage by the same reduction ratio introduced by the whole of the input divider, MX1 and A1. Output 12 of A1 and output 20 of MX2 are connected to the two inputs of an analog adder S1 whose output, on which bipolar signals are present as will be described hereinafter, is connected to a sample-and-hold circuit SH, followed by an analog-to-digital converter AD.

Circuit SH is set to sampling or holding conditions by the signal present on a wire 60, coming from control logic LC. For instance, SH is set to holding condition when that signal is 1. That signal is sent with a certain delay with respect to the operation of MX1, so as to permit the recognition of the sign of the input voltage and the possible switching of MX2. The way in which the delay is generated will be investigated while describing LC. Preferably SH is realized such that its gain is −0.5; value 0.5 is advantageous for circuit stability purposes and the negative sign is required by the converter as the reference voltage is positive.

Converter AD is connected also to MX2 (wire 20), from which it receives the reference voltage, and to control logic LC, from which it receives a "start conversion" command (wire 61) and to which it sends a signal indicating the "conversion end" (wire 62); converter AD supplies on output 4 a bit pattern dependent on the ratio of the voltage supplied by SH to the reference voltage. Obviously the reference voltage, that is proportional to exchange voltage Vc, will undergo the same fluctuations in time as Vc. On the other hand, the criteria characterizing connection development are obtained from the exchange voltage and therefore undergo the same fluctuations, that affect also the input signal of AD. As a consequence, the bit pattern outgoing from AD is independent of said fluctuations, as is known per se from EP—A1 7677.

This fact can be seen also from a mathematical standpoint. In fact, let us denote by:

Vi    the voltage present on a wire 1 at the measurement instant;
V    the output voltage of A1;
Vc(−) the voltage value on wire 2a at the measurement instant;
Vc(+) the voltage value on wire 2b at the measurement instant;
Vr    the reference voltage (present on wire 20);
V1    the output voltage of circuit SH;
h    the total attenuation caused by the input network, multiplexer MX1 and A1;
k    the absolute value of the gain of A2 or A3 (equal to h).

Then output voltage $V_A$ of A1 is given by:

$$V_A = hVi \qquad (1)$$

Voltage Vr depends on the position of multiplexer MX2; in case of negative voltage on wire 11 comparator CM connects wire 20 with the output of amplifier A2, i.e.:

$$Vr = -k\ Vc(-) \qquad (2)$$

In case of positive voltage on wire 11 comparator CM connects wire 20 with the output of amplifier A3, i.e.:

$$Vr = +k\ Vc(+) \qquad (2')$$

At the output of S1 there will be voltage $V_A + V_r$, and at the output of SH there will be voltages that instant by instant have values:

$$V1 = -\frac{1}{2}(V_A + Vr). \qquad (3)$$

Value −1/2 represents the gain of circuit SH.

Substituting (1) and (2) or (2') (as the case may be) into (3) we obtain:

$$V1 = -\frac{1}{2}[hVi - k\ Vc(-)] \qquad (4)$$

$$V1 = -\frac{1}{2}h[Vi + k\ Vc(+)] \qquad (4')$$

that, being k=h, become:

$$V1 = -\frac{k}{2}[Vi - Vc(-)] \qquad (5)$$

$$V1 = -\frac{k}{2}[Vi + Vc(+)] \qquad (5')$$

Input voltage Vi depends on the exchange voltage and with good approximation it can be considered proportional to it, i.e.:

$$Vi = \lambda Vc(-) \qquad (6)$$

$$Vi = \lambda Vc(+) \qquad (6')$$

Substituting (6) and (6') into (5) and (5') respectively, the following relationships can be obtained:

$$V1 = -\frac{k}{2}[\lambda Vc(-)] - Vc(-) = -\frac{k\ Vc(-)}{2}\lambda[-1] \qquad (7)$$

$$V1 = -\frac{k}{2}[\lambda Vc(+) + Vc(+)] = -\frac{k\ Vc(+)}{2}[\lambda + 1] \qquad (7')$$

As mentioned, the output signal of AD is proportional to the ratio between the input voltage of the converter and the reference voltage; then we obtain respectively:

$$\frac{V_1}{V_r} = \frac{\dfrac{kV_c(-)}{2}[\lambda-1]}{-kV_c(-)} = \frac{\lambda-1}{2} = -\frac{1}{2}+\frac{\lambda}{2} \quad (8)$$

$$\frac{V_1}{V_c} = \frac{\dfrac{-kV_c(+)}{2}[\lambda-1]}{-kV_c(+)} = \frac{-\lambda-1}{2} = -\frac{1}{2}-\frac{\lambda}{2} \quad (8')$$

therefore the output signal is independent of the input voltage fluctuations.

Relationships (7) and (7') show that the signals outgoing from S1 are unipolar; in fact the voltage present on a wire can never exceed the supply voltage (that is $\lambda=1$) and therefore $\lambda V_c(-) \geq V_c(-)$ or $\lambda V_c(+) = V_c(+)$; in both cases there is always $V_1 \leq 0$.

Fig. 3 shows the input-output gates PA and PB of the processor, which allow the dialog with the data extracting system PD (Fig. 1) through connections 3, 4.

Gate PA is also connected, through wire 80 of connection 8, to the input of a shift register SR that is controlled by the fundamental clock signal (CK) of the system and receives from PA a "data ready" signal, which indicates the presence of a stabilized signal on wire 3. The output of a cell of SR corresponding to a predetermined number of shift steps is connected through a wire 81 of connection 8 to gate PA to send it a strobe signal: this signal, which is necessary to allow a new select signal to be sent to MX1 (Fig. 2), cannot be autonomously generated by MX1, and then is supplied by SR after a time sufficient to ensure the reception of the select signal by MX1. In other words, the first delay introduced by SR is to allow the analog signals coming from the exchange to become stabilized at the input of SH, i.e. it must compensate the operation time of MX1 and the propagation time from the input of MX1 to SH.

A second output 82 of SR is activated after a further number of shift steps such that the total delay is not lower than the time necessary to ensure that the possible switching of MX2 (Fig. 2) has occurred; output 82 is connected to inverter I1 whose output is connected on the one side to a second inverter I2, whose output is wire 61, and on the other side to the "clear" input of a D-type flip-flop FF.

The preset and data inputs of FF are fixedly connected to a logic level "1" and output $\overline{Q}$ is connected through wire 60 to sample-and-hold circuit SH (Fig. 2).

The clock input of FF is connected to wire 62, which is also connected to an input gate PB of the processor for supplying it with the signal denoting the end of analog-to-digital conversion.

Circuits SR, FF and inverters I1, I2 form together logic LC. The operation of LC can be easily deduced from the diagram; the arrival of the conversion end signal at flip-flop FF sets a zero onto wire 60, so that logic LC sets sample-and-circuit SH (Fig. 2) into sampling conditions; activation of output 82 of SR sets wires 60, 61 to 1, bringing circuit SH to holding conditions and starting the conversion in AD; the presence of inverter I2 surely prevents the "start conversion" signal from arriving at AD before SH is passed to holding conditions. Register SR has such a length as to ensure that the activation of wires 60, 61 takes place after MX2 has been switched.

The general apparatus operation is immediately deduced from what has been hereinbefore described: the apparatus is connected to wires 1 to be tested and the operator, by means of terminal ST, communicates the processor the information necessary to characterize the various groups of wires. Then the processor commands a cyclical scanning of these wires. The dynamics of the signals extracted from each wire is reduced and the signals are sampled and converted into digital form. At the conversion end the digital signals are then loaded through gate PB into the processor, where they can be compared with thresholds previously stored, so as to obtain a single bit indicating whether or not a threshold has been exceeded.

The thresholds are determined on the basis of the theoretical voltage levels present on the wires during the various connection steps, i.e. a plurality of different thresholds are possible for each connection; said threshold will be grouped in the memory according to the kind of exchange, the kind of device and the kind of measurement; the group to be utilized for a measurement will be communicated to the apparatus during the initialization then the individual threshold in a group will be called for by program at suitable instants. The threshold values can be determined "a priori", upon the knowledge of the electrical characteristics of the various exchanges; the thresholds could also be computer-determined in a self-teaching phase, by following the development of one or more standard connections.

The single bit obtained from the comparison is integrated to ensure that a voltage change actually corresponds to a criterion change. Now the criterion present on the wire is recognized and the processor can effect the various correlations among the criteria detected on different wires of the same device to recognize the various connection steps.

At the end of a connection all relevant data are transferred into mass memory MB, and then, upon operator command, they are displayed on the printer of terminal ST. If required, the data are also sent to higher hierarchy centre CS for further processing.

From what has been hereinbefore described the advantages of the present invention can be easily deduced. The possibility of detecting both positive and negative voltages over the same wire and the use of stored program processing units with determination of the threshold by a self-teaching process makes the device universal, in the sense that it can be connected to different devices of any kind of exchange and can make a plurality of measurements besides the processing of outgoing calls, e.g. supervision of a subscriber for long periods, traffic intensity measurement, etc. Besides, the circuits forming the device are mounted on two printed circuit boards of the size known as "double Europe standard" (one board for the data extracting means, the control logic and the microprocessor, including the interfaces to the printer and the higher hierarchy centre, and one for the mass memory), so that the device is easily portable. From this viewpoint the use of a magnetic bubble system as mass memory is justified as it offers high storage capacity with limited encumbrance.

Besides, the presence of a mass memory in addition to the main memory of the processor allows long records for a plurality of subscribers without data losses even in case of interruption of printer operation.

## Claims

1. Apparatus for telephone-criteria collection from devices of any type of electromechanical exchanges, and more particularly from subscriber's line circuits, for recording data about outgoing calls for documentation and maintenance purposes, comprising means (PD) for extracting from said devices voltages representing said criteria, a local processing unit (EL) for processing the data represented by said criteria, a local terminal (ST) with a printer for displaying the processing results and a nonvolatile mass memory (MB) for temporarily storing the processed data prior to printing, said extracting means (PD) being completely built up of electronic components comprising a switching means (MX1) arranged to extract in sequence from a plurality of wires (1a, . . . , 1n), relative to one or more devices, criteria that on the same wire can consist of negative and positive voltages, and an analog-to-digital-converter (AD) supplying the processing unit with bit patterns representing digitized samples of the voltages present on the individual wires, and being interfaced with the local processing unit by a control logic (LC) that coordinates the operations of the extracting means (PD) and of the local processing unit (EL), characterized in that said control logic (LC) sets in sequence the switching instants (via 81, 3) in the switching means (MX1), sample and hold phases (via 60) in a sample-and-hold circuit (SH) connected between the switching means (MX1) and the analog-to-digital converter (AD) and the control signal (via 61) of starting the digitization, by exploiting a switching command signal (on 7, 8) from the processing unit (EL) and an end of digitization, signal (on 62) supplied from the analog-to-digital converter (AD), the bit patterns being independent of fluctuations in time of the exchange voltage.

2. Apparatus according to claim 1, comprising:

— an input network for connection to the exchange wires (1a, . . ., 1n), comprising, for each wire, a voltage divider (Pa, . . ., Pn); and

— a first analog multiplexer (MX1) having a plurality of inputs connected each to the output (10a . . . 10n) of one of said dividers (Pa . . . Pn) and only one output (11), and receiving from said local processing unit (EL) the command signals necessary to cyclically connect said inputs with the output, characterized by

— a first operational amplifier (A1), inserted in non-inverting connection on the output of said multiplexer (MX1) to keep constant the impedance seen from the exchange at an input (10a . . . 10n) of said multiplexer both when that input is connected to the output and in the opposite case, the gain of said amplifier being such that, taking into account the input divider and the internal resistance of the multiplexer (MX1) under connection conditions, the value of the amplifier output voltage is a pre-determined fraction of the voltage present on the scanned wire (1a, . . ., 1n);

— an analog adder (S1), that has a first input connected to the output of said first amplifier and receives at a second input a reference voltage of constant sign, proportional to the exchange voltage.

3. Apparatus according to claim 2, characterized in that the reference voltage is present at the output of a second analog multiplexer (MX2) having two inputs connected respectively to the outputs of a second operational amplifier (A2), in inverting connection, and of a third operational amplifier (A3), in noninverting connection, the inputs of said amplifiers being connected to the sources of the negative and respectively the positive exchange voltage; and in that said second multiplexer (MX2) has a control input connected to the output of a comparator (CM), whose non-inverting input is connected to the output (11) of the first multiplexer (MX1) and whose inverting input is grounded, and connects its output (20) to the output of the second amplifier (A2) when the comparator (CM) detects the presence of a negative voltage on the output of the first multiplexer (MX1), and to the output of the third amplifier when the comparator (CM) detects the presence of positive voltage on the output of the first multiplexer (MX1).

4. Apparatus according to claim 3 characterized in that said second and third amplifier (A2, A3) have such gains that the reference voltage is reduced with respect to the exchange voltage in the same ratio of the output voltage of the first amplifier (A1) to the input voltage to one of said dividers (Pa . . . Pn).

5. Apparatus according to claim 2, characterized in that said adder (S1) and said sample-and-hold circuit cooperate so as to give at the output of the latter unipolar signals, opposite in sign to the reference voltage.

6. Apparatus according to either of claims 3 and 4, characterized in that said control logic comprises a shift register (SR) that has an input connected to an output gate (PA) of the processor, from which the register receives a signal indicating the presence of a select command for said first multiplexer (MX1), a first output connected to said gate (PA) and activated after a first number of shift steps such as to ensure the occurred reception of the command by said first multiplexer, and a second output that is activated after a second predetermined number of shift steps, higher than the first, and is connected on one side of said analog-to-digital converter (AD) to start the conversion operation, and on the other side to a flip-flop of which an output is connected to said sample-and-hold circuit (SH) to establish the alternance between sample and hold operations, said second number of shift steps being such that the delay in sending the "hold" and "start conversion" signals with respect to sending the select command of the the first multiplexer (MX1) is longer than the time taken for the possible switching of said second multiplexer (MX2), the switching of said flip-flop being caused by the "conversion end" signal emitted by said converter.

7. Apparatus according to claim 1, characterized in that said processing unit is a microprocessor capable of recognizing the various criteria by comparing the values of the respective digitized samples with suitable thresholds dependent on the telephone exchange and on the device to which the apparatus is connected and typical for each criterion, said thresholds being determined by the processor itself by means of a self-teaching process by following the evolution of one or more standard connections.

8. Apparatus according to claim 1, characterized in that said mass memory system (MB) is a magnetic-bubble system.

**Patentansprüche**

1. Apparat zum Sammeln von Fernsprechkriterien von Schaltungsorganen beliebiger Art elektromechanischer Vermittlungsstellen, insbesondere von Teilnehmer-Leitungsschaltungen, zum Aufzeichnen von Daten über abgehende Anrufe für Zwecke der Dokumentation und Wartung, mit Einrichtungen (PD) zum Extrahieren von Spannungen, die diese Kriterien anzeigen, von den Schaltungsorganen, ferner mit einer örtlichen Verarbeitungseinheit (EL) zum Verarbeiten der von den Kriterien dargestellten Daten, einem örtlichen Terminal (ST) mit einem Drucker zum Anzeigen der Verarbeitunsergebnisse und mit einem nicht-flüchtigen Großspeicher (MB) zum vorübergehenden Speichern der verarbeiteten Daten vor dem Drucken, wobei die extrahierende Einrichtung (PD) komplett aus elektronischen Bauteilen aufgebaut ist einschließlich einer Schalteinrichtung (MX1), die gemäß ihrer Schaltungsanordnung in Aufeinanderfolge von einer Mehrzahl von Leitern (1a, . . ., 1n), die sich auf eine oder mehrere der Schaltungsorgane beziehen, Kriterien extrahiert, die auf dem selben Leiter aus negativen und positiven Spannungen bestehen können, und eines Analog/Digital-Umsetzers (AD), der der Verarbeitungseinheit Bitmuster liefert, die die digitalisierten Abtastwerte der auf den einzelnen Leitern vorliegenden Spannungen wiedergeben, und der mit der örtlichen Verarbeitungseinheit über die Zwischenschaltung einer Steuerlogik (LC) verbunden ist, die die Operationen der extrahierenden Einrichtungen (PD) und der örlichen Verarbeitungseinheit (EL) koordiniert, dadurch gekennzeichnet, daß die Steurlogik (LC) in Aufeinanderfolge die Schaltzeitpunkte (über 81, 3) in der Schalteinrichtung (MX1), Abtast- und Haltephasen (über 60) in einer zwischen die Schalteinrichtung (MX1) und den Analog/Digital-Umsetzer (AD) eingeschalteten Tast- und Halte-Schaltung (SH) und das Steuersignal (über 61) des Digitalisierungsstarts setzt, indem sie ein Schaltbefehlsignal (auf 7, 8) von der Verarbeitungseinheit (EL) und ein Signal des Digitalisierungsendes (auf 62), das vom Analog/Digital-Umsetzer (AD) geliefert wird, auswertet, wobei die Bitmuster von zeitlichen Fluktuationen der Vermittlungsstellen-Spannung unabhängig sind.

2. Apparat nach Anspruch 1, mit

— einer Eingangsschaltung zur Verbindung mit den Leitern (1a, . . ., 1n) der Vermittlungsstelle, wobei diese Schaltung für jeden Leiter einen Spannungsteiler (Pa, . . . ., Pn) enthält; und

— einem ersten analogen Multiplexer (MX1) mit einer Mehrzahl von Eingängen, die jeweils mit dem Ausgang (10a, . . ., 10n) eines der Spannungsteiler (Pa, . . ., Pn) verbunden sind, und mit nur einem Ausgang (11), wobei dieser Multiplexer von der örtlichen Verarbeitungseinheit (EL) die zum zylkischen Verbinden der Eingänge mit dem Ausgang notwendigen Befehlsignale empfängt, gekennzeichnet durch

— einen ersten Operationsverstärker (A1), der in nicht-invertierender Verbindung in den Ausgang des Multiplexers (MX1) eingesetzt ist, um die von der Vermittlungsstelle an einem Eingang (10a, . . ., 10n) des Multiplexers gesehene Impedanz sowohl, wenn der Eingang mit dem Ausgang verbunden ist, als auch im umgekehrten Fall konstant zu halten, wobei der Verstärkungsgrad des Verstärkers so ist, daß unter Berücksichtigung des Eingangsteilers und des Innenwiderstands des Multiplexers (MX1) im Verbindungszustand der Wert der Ausgangsspannung des Verstärkers ein gegebener Bructeil der am abgetasteten Leiter (1a, . . ., 1n) vorliegenden Spannung ist;

— einen analogen Addierer (S1), der mit einem ersten Eingang an den Ausgang des ersten Verstärkers angeschlossen ist und an einem zweiten Eingang eine Bezugsspannung von konstantem Vorzeichen, die proportional der Spannung der Vermittlungsstelle ist, empfängt.

3. Apparat nach Anspruch 2, dadurch gekennzeichnet, daß die Bezugsspannung am Ausgang eines zweiten analogen Multiplexers (MX2) vorliegt, der zwei Eingänge aufweist, die mit den Ausgängen eines zweiten Operationsverstärkers (A2) in invertierender Verbindung bzw. eines dritten Operationsverstärkers (A3) in nicht-invertierenden Verbindung verbunden sind, wobei die Eingänge dieser Verstärker mit den negativen bzw. positiven Spannungsquellen der Vermittlungsstelle verbunden sind; und daß der zweite Multiplexer (MX2) mit seinem Steuereingang an die Ausgangsklemme eines Komparators (CM) angeschlossen ist, dessen nicht-invertierender Eingang mit dem Ausgang (11) des ersten Multiplexers (MX1) verbunden ist und dessen invertierender Eingang geerdet ist, und seinen Ausgang (20) mit dem Ausgang des zweiten Verstärkers (A2) verbindet, wenn der Komparator (CM) das Vorliegen einer negativen Spannung an Ausgang des ersten Multiplexers (MX1) feststellt, und mit dem Ausgang des dritten Verstärkers verbindet, wenn der Komparator (CM) das Vorliegen einer positiven Spannung am Ausgang des ersten Multiplexers (MX1) feststellt.

4. Apparat nach Anspruch 3, dadurch gekennzeichnet, daß der zweite Verstärker (A2) und der dritte Verstärker (A3) solche Verstärkungsgrade haben, daß die Bezugsspannung in Bezug zur Vermittlungsstellenspannung im gleichen Verhältnis wie die Ausgangsspannung des ersten Verstärkers (A1) zur Eingangsspannung eines der Teiler (Pa, ..., Pn) reduziert ist.

5. Apparat nach Anspruch 2, dadurch gekennzeichnet, daß der Addierer (S1) und die Tast- und Halteschaltung so zusammenwirken, daß am Ausgang der letzteren unipolare Signale auftreten, deren Vorzeichen entgegengesetzt dem der Bezugsspannung ist.

6. Apparat nach einem der Ansprüche 3 oder 4, dadurch gekennzeichnet, daß die Steuerlogik ein Schieberegister (SR) umfaßt, das mit einem Eingang an ein Ausgangstor (PA) der Verarbeitungseinheit angeschlossen ist, von der es ein das Vorliegen eines Wählbefehls für den ersten Multiplexer (MX1) anzeigendes Signal empfängt, und mit einem ersten Ausgang mit diesem Tor (PA) verbunden ist und nach einer ersten Anzahl von Verschiebeschritten aktiviert wird, um so den erfolgten Empfang des Befehls durch den ersten Multiplexer zu versichern, sowie mit einem zweiten Ausgang, der nach einer zweiten vorgegebenen Anzahl von Verschiebeschritten, die höher ist als die erste, aktiviert ist, einerseits mit dem Analog/Digital-Umsetzer (AD) verbunden ist, um die Umsetzoperation zu starten, und andererseits mit einem Flip-Flop verbunden ist, der seinerseits mit einem Ausgang mit der Tast- und Halte-Schaltung (SH) verbunden ist, um das Alternieren zwischen der Tastoperation und der Halteoperation festzulegen, wobei die zweite Anzahl der Schiebeschritte so ist, daß die Verzögerung beim Senden der Signale "Halten" und "Umsetzungsbeginn" in Bezug zum Senden des Wählbefehls des ersten Multiplexers (MX1) länger ist als die für das mögliche Schalten des zweiten Multiplexers (MX2) verwendete Zeit, und das Schalten des Flip-Flops durch das vom Umsetzer abgegebene Signal "Umsetzungsende" bewirkt wird.

7. Apparat nach Anspruch 1, dadurch gekennzeichnet, daß die Verarbeitungseinheit ein Mikroprozessor ist, der die verschiedenen Schaltkennzeichen durch Vergleich der jeweiligen digitalisierten Abtastwerte mit entsprechenden Schwellen erkennt, die von der Fernsprechvermittlungsstelle und den Schaltungsorganen, mit denen der Apparat verbunden ist, abhängen und typisch für jedes Schaltkennzeichen sind und die von der Verarbeitungseinheit selbst mit Hilfe eines Selbstlehrprozesses durch Verfolgen der Entwicklung einer oder mehrerer Standardverbindungen bestimmt werden.

8. Apparat nach Anspruch 1, dadurch gekennzeichnet, daß der Großspeicher (MB) ein Magnetblasensystem ist.

**Revendications**

1. Appareil collecteur de critères téléphoniques d'organes de centraux électromécaniques de tous genres, en particulier des circuits d'abonné, pour l'enregistrement de données relatives aux appels sortant pour la documentation et l'entretien, comprenant des moyens (PD) pour prélever desdits organes des tensions représentant lesdits critères, un dispositif local (EL) de traitement des données représentées par lesdits critères, un terminal local (ST) avec un imprimeur pour afficher les résultats des traitements, et une mémoire de masse (MB) non volatile pour mémoriser temporairement les données traitées avant qu'elles soient imprimées, lesdits moyens de prélèvement (PD) étant complètement réalisés à l'aide de dispositifs électroniques, comprenant un commutateur (MX1) apte à prélever en séquence d'une pluralité de fils (1a ... 1n), relatifs à un ou à une pluralité d'organes, des critères qui, sur un même fil, peuvent consister en tensions aussi bien positives que négatives, et un convertisseur analogique-numérique (AD) qui délivre au dispositif de traitement des configurations de bits représentant des échantillons numériques des tensions présentes sur chaque fil, et étant interfacés vers le dispositif local de traitement par une logique de contrôle (LC) qui coordonne les opérations des moyens de prélèvement (PD) et celles du dispositif local de traitement (EL), caractérisé en ce que ladite logique de contrôle (LC) établit en séquence les instants de commutation (par l'intermédiaire de 81,3) dans le commutateur (MX1), des phases d'échantillonnage et de maintien (par l'intermédiaire de 60) dans un circuit d'échantillonnage et maintien (SH) connecté entre le commutateur (MX1) et le convertisseur analogique-numérique (AD), et le signal de commande (par l'intermédiaire de 61) du début de conversion, d'après un signal de commande de la commutation (sur 7, 8) venant du dispositif de traitement (EL) et un signal de fin de chiffrage (sur 62) fourni par le convertisseur analogique-numérique (AD), les configurations de bits étant indépendantes des fluctuations dans le temps de la tension du central.

2. Appareil suivant la revendication 1, comprenant:

— un réseau d'entrée pour la connexion aux fils du central (1a . . . 1n) composé, pour chaque fil, d'un diviseur de tension (Pa . . . Pn); et
— un premier multiplexeur analogique (MX1) qui a une pluralité d'entrées, connectées chacune à la sortie (10a . . . 10n) d'un desdits diviseurs (Pa . . . Pn), et une sortie unique (11) et qui reçoit dudit dispositif local de traitement (EL) les signaux de commande nécessaires pour établir cycliquement la connexion entre lesdites entrées et la sortie; caractérisé par
— un premier amplificateur opérationnel (A1), connecté de façon non inversante sur la sortie dudit multiplexeur (MX1) pour rendre constante l'impédance vue du central à une entrée (10a . . . 10n) dudit multiplexeur aussi bien lorsque ladite entrées est connectées à la sortie, qu'en cas contraire, le gain dudit amplificateur étant tel que, compte tenu du diviseur d'entrée et de la résistance interne du multiplexeur (MX1) lorsqu'une entrée est connectée à la sortie, la valeur de la tension de sortie de l'amplificateur soit une fraction prédéterminée de la tension présente sur le fil (1a . . . 1n) exploré;
— un additionneur analogique (S1), qui a une première entrée connectée à la sortie dudit premier amplificateur et qui reçoit à une deuxième entrée une tension de référence de signe constant, proportionnelle à la tension du central.

3. Appareil suivant la revendication 2, caractérisé en ce que la tension de référence est présente à la sortie d'un deuxième multiplexeur analogique (MX2) ayant deux entrées connectées respectivement aux sorties d'un deuxième amplificateur opérationnel (A2), en connexion inversante, et d'un troisième amplificateur opérationnel (A3), en connexion non inversante, dont les entrées sont connectées à la source de la tension négative ou respectivement de la tension positive du central; et en ce que ledit deuxième multiplexeur (MX2) a une entrée de commande connectée à la sortie d'un comparateur (CM), dont l'entrée non inversante est connectée à la sortie (11) du premier multiplexeur (MX1), et l'entrée inversante est connectée à la terre, et relie à sa sortie (20) la sortie du deuxième amplificateur (A2), quand le comparateur (CM) détecte la présence d'une tension négative à la sortie du premier multiplexeur (MX1), et la sortie du troisième amplificateur, quand le comparateur (CM) détecte la présence d'une tension positive sur la sortie du premier multiplexeur (MX1).

4. Appareil suivant la revendication 3, caractérisé en ce que lesdits deuxième et troisième amplificateurs (A2, A3) ont un gain tel que la tension de référence est réduite par rapport à la tension du central suivant la même rapport qui existe entre la tension de sortie du premier amplificateur A1) et la tension d'entrée à un desdits diviseurs (Pa, . . . Pn).

5. Appareil suivant la revendication 2, caractérisé en ce que ledit additionneur (S1) et ledit circuit d'échantillonnage et de maintien (SH) opèrent conjointement de façon à donner à la sortie de ce dernier des signaux unipolaires de signe opposé au signe de la tension de référence.

6. Appareil suivant l'une ou l'autre des revendications 3 et 4, caractérisé en ce que ladite logique de contrôle comprend un registre de décalage (SR) qui a une entrée connectée à une porte de sortie (PA) du dispositif de traitement d'où il reçoit un signal indiquant la présence d'une commande de commutation pour ledit premier multiplexeur (MX1), une première sortie connectée à ladite porte (PA) et activée après un premier nombre de pas de décalage tel à garantir que la commande ait été reçue par le premier multiplexeur, et une deuxième sortie qui est activée après un deuxième nombre prédéterminé de pas de décalage, plus élevé que le premier, et qui est connectée d'un côté audit convertisseur analogique numérique (AD) pour faire commencer l'opération de conversion, et de l'autre côté à une bascule ayant une sortie connectée audit circuit d'échantillonnage et de maintien (SH) pour déterminer l'alternance entre led opérations d'échantillonnage et de maintien, ledit deuxième nombre de pas de décalage étant tel que le retard dans l'envoi des signaux de maintien et de début de conversion, par rapport à l'envoi de la commande de commutation du premier multiplexeur (MX1), est plus élevé que le temps nécessaire pour la commutation éventuelle dudit deuxième multiplexeur (MX2), la commutation de ladite bascule étant déterminée par le signal de fin de conversion émis par ledit convertisseur.

7. Appareil suivant la revendication 1, caractérisé en ce que ledit dispositif de traitement est un microprocesseur qui reconnaît les divers critères en comparant la valeur des échantillons numérisés respectifs avec des seuils appropriés qui dépendent du type de central téléphonique et du type d'organe auquel l'appareil est connecté, lesdits seuils étant différents pour les différents critères et étant déterminés par le dispositif de traitement au moyen d'un procédé d'apprentissage en suivant le développement d'une ou plusieur connexions type.

8. Appareil suivant la revendication 1, caractérisé en ce que ledit système de mémoire de masse (MB) est un système de mémoire à bulles magnétiques.

Fig.1

Fig.2

Fig.3